# EUROPÄISCHE PATENTSCHRIFT

(11) **EP 2 856 616 B1**
(45) Veröffentlichungstag und Bekanntmachung des Hinweises auf die Patenterteilung: **20.11.2019**
(21) Anmeldenummer: 13729596.0
(22) Anmeldetag: 24.05.2013
(51) Int. Cl.: H02K 5/167, H02K 5/124

(54) **ELEKTROMOTORISCHER ANTRIEB, INSBESONDERE GEBLÄSEANTRIEB**
ELECTRIC MOTOR DRIVE, PARTICULARLY A FAN DRIVE
ENTRAÎNEMENT À MOTEUR ÉLECTRIQUE, EN PARTICULIER ENTRAÎNEMENT DE SOUFFLANTE

(30) Priorität: 26.05.2012 DE 102012010480
(43) Veröffentlichungstag der Anmeldung: 08.04.2015
(73) Patentinhaber: Brose Fahrzeugteile GmbH & Co. Kommanditgesellschaft, Würzburg, 97076 Würzburg (DE)
(72) Erfinder: WITTSTADT, Frank, 97334 Sommerach (DE); STÖHLING, Marco, 97795 Schondra (DE)
(74) Vertreter: FDST Patentanwälte
(86) Internationale Anmeldenummer: PCT/EP2013/001539
(87) Internationale Veröffentlichungsnummer: WO 2013/178341

(56) Entgegenhaltungen:
- EP-A1- 0 259 714
- EP-A1- 0 698 956
- WO-A2-2010/075844

## Beschreibung

Die Erfindung betrifft einen elektromotorischen Antrieb gemäß dem Oberbegriff des Anspruchs 1. Ein derartiger Antrieb ist aus der WO 2010/075844 A2 bekannt.

Bei einem solchen elektromotorischen Antrieb, der häufig ein Lüfterrad eines Gebläses einer Heizungs- und Klimaanlage eines Kraftfahrzeugs antreibt, ist die Motorwelle des Elektromotors sowohl auf der Bürstensystemseite (BS), auf der mit den Bürsten kontaktierte Kommutatorlamellen des Motors angeordnet sind, als auch auf der gegenüberliegenden Seite (AS) in Gleitlagern drehbar gelagert, die als Kalottenlager ausgeführt sind. Die Kalottenlager sind mittels einer Klemmbrille gegen ein Lagerschild gepresst. Die Motorwelle ragt aus dem kommutatornahen Lagerschild mit einem Wellenabschnitt heraus, auf dem das Lüfterrad über dessen zentraler Radnabe befestigt ist.

Um bei einem derartigen elektromotorischen Antrieb unerwünschte Geräusche aufgrund eines Axialspiels der Motorwelle und damit des Motorläufer-Laufrad-Systems zu vermeiden, ist bei dem aus der WO 2010/075844 A2 bekannten Antrieb zumindest auf der dem Lagerschild abgewandten Lagerseite des BS-seitigen Wellenlagers ein Dämpfungssystem zur Schalldämpfung angeordnet, Das Dämpfungssystem weist eine Dichtscheibe oder Dichtringscheibe und eine Gleitscheibe (Anlaufscheibe) oder Gleitringscheibe mit Gleiteigenschaften auf. Zwischen die Dichtscheibe und die Gleitscheibe ist eine auf die Motorwelle aufgesetzte federringartige Wellfeder als Federelement eingesetzt. Das Dämpfungssystem weist zudem auf der dem Wellenlager zugewandten Scheibenseite der Dichtscheibe ein ringförmiges Dämpfungselement auf. Im zusammengesetzten Zustand des Dichtungssystems liegt die Wellfeder in einem zwischen dem Dämpfungselement der Dichtscheibe und der Motorwelle gebildeten Ringraum ein, so dass das Dämpfungselement die Wellfeder koaxial umgibt.

Das Dämpfungssystem dient zur Schallpegelreduzierung insbesondere lagerspielbedingter Anschlaggeräusche, jedoch zusätzlich auch zur Dämpfung sogenannter U-Töne (Heulgeräusche), die durch betriebsbedingte Störungen bei jeder Motorumdrehung und damit verbundenen Resonanzerscheinungen verursacht werden.

Der Erfindung liegt die Aufgabe zugrunde, einen elektromotorischen Antrieb der eingangs genannten Art hinsichtlich dessen Dämpfungssystem zu verbessern.

Diese Aufgabe wird erfindungsgemäß gelöst durch die Merkmale des Anspruchs 1. Vorteilhafte Ausgestaltungen und Weiterbildungen sowie Varianten der Erfindung sind Gegenstand der Unteransprüche,

Hierzu weist erfindungsgemäss der elektromotorische Antrieb mit einem Kommutatormotor, dessen Motorwelle auf axial gegenüberliegenden Seiten in jeweils mittels eines Lagerschildes abgedeckten radialen Wellenlagern drehbar gelagert ist, auf der dem Lagerschild abgewandten Lagerseite zumindest eines der Wellenlager ein Dämpfungssystem zur Schalldämpfung mit einer Dichtringscheibe sowie mit einer Gleitringscheibe und mit einem mit dieser einteiligen Federelement auf. Mit anderen Worten weist das Dämpfungssystem eine Dichtringscheibe und eine Gleltringscheibe mit einteiligem Federelement auf.

Das Federelement ist als an die Gleitringscheibe angeformte bzw. mit dieser einteilige oder einstückige Federarme realisiert, Diese, vorzugsweise wellfederartigen Federarme erstrecken sich erfindungsgemäss in Umfangsrichtung der Gleitringscheibe kreisbogenförmig, wobei deren Freienden In Axialrichtung aus der Scheibenoberfläche der Gleitringscheibe bzw. dessen Grundkörpers herausragen.

Das Material der mit dem Federelement einteiligen Gleitringscheibe ist erfindungsgemäss Metall, insbesondere Stahl, so dass keine Schrumpfung der Dichtscheibe mit integriertem Federelement erfolgen kann. Dies bietet den Vorteil einer zuverlässigen Verrastung mit der Dichtringscheibe.

Das Dämpfungssystem weist zweckmäßigerweise zusätzlich ein ringförmiges Dämpfungselement auf, das auf der dem Wellenlager zugewandten Innenseite der Dichtringscheibe vorgesehen ist. Eine zwischen das Wellenlager und das Dämpfungssystem eingelegte Klemmbrille stützt sich umfangsseitig an der Lagerschale ab. Durch die Verwendung einer an sich bekannten Klemmbrille, die zwischen das Wellenlager und das Dämpfungssystem eingelegt ist, und die sich umfangsseitig am Lagerschild abstützt, wird das zweckmäßigerweise als Kalottenlager ausgeführte Wellenlager zuverlässig in Richtung auf das dem Dämpfungssystem gegenüberliegende Lagerschild gepresst.

Gemäß einer zweckmäßigen Weiterbildung weist die Gleitringscheibe kreissektorartige Mitnehmerabschnitte auf. Bel dieser Ausgestaltung sind die Federarme an einander abgewandten Kreisradien der Mitnehmerabschnitte an diese angeformt, wobei vorzugsweise alternierend drei Federarme und drei Mitnehmerabschnitte gleichmäßig verteilt am Scheibenumfang der Gleitringscheibe angeordnet sind.

Besonders bevorzugt überragen die Mitnehrnerabschnitte die daran angeformten Federarme in Radialrichtung zumindest geringfügig. In Verbindung mit korrespondierenden Drehlageranschlägen an der nachfolgend auch als Dichtscheibe bezeichneten Dichtringscheibe dienen diese radialen Überstände an den Mitnehmerelementen zur Drehkopplung zwischen der Gleitringscheibe und der Dichtringscheibe. Hierzu weist die Dichtringscheibe geeigneterweise einen umfangsseitig umlaufenden Kragen auf, an den innenseitig mindestens ein Drehanschlag für die Gleitringscheibe angeformt ist.

Im Montagezustand des Dämpfungssystems sind die Dichtringscheibe und die Gleitringscheibe erfindungsgemäss miteinander verrastet. Hierzu ist bevorzugt an den Kragen der Dichtringscheibe eine Hinterschneidungskontur angeformt. Die Mitnehmerabschnitte der Gleitringscheibe übernehmen bei dieser bevorzugten Ausführungsform eine Doppelfunktion, nämlich einerseits die Herstellung der Verrastung mit der Dichtringscheibe, wozu die Mitnehmerabschnitte der Gleitringscheibe die Hinterschneidungskontur der Dichtringscheibe hintergreifen. Andererseits bilden die Mitnehmerabschnitte mit deren die Federarme radial überragenden Abschnitten eine Anlagekontur für den oder jeden an den Kragen der Dichtringscheibe angeformten Drehanschlag.

Im verrasteten Zustand der Gleltringscheibe mit der Dichtringscheibe bilden die Mitnehmerelemente einen Anschlag in der entsprechenden Drehrichtung des Motors bzw. der Motorwelle, sobald die radial über die Federarme hinausragenden Abschnitte der Mitnehmerelemente den im Bogenmaß beispielsweise 120° betragenden Abstand zwischen zwei Drehanschlägen der Dichtringscheibe bei der ersten Inbetriebnahme überstrichen oder durchfahren haben.

In vorteilhafter Ausgestaltung sind die Federarme wellenförmig mit zumindest geringfügig axial zur Scheibenoberfläche der Gleitringscheibe hin gerichteten Freienden ausgebildet. Die Armlänge eines jeden der bevorzugt drei Federarme beträgt etwa ein Sechstel des Scheibenumfangs der Gleitringscheibe.

Die Halterung des Dämpfungssystems auf der Motorwelle ist zweckmäßigerweise als Presssitz ausgeführt. Dabei ist die Presskraft oder Haftung der Dichtringscheibe auf der Motorwelle größer als diejenige der Gleitringscheibe mit angeformtem Federelement. Aufgrund einer gewissen Verschieblichkeit der Dichtringscheibe auf der Motorwelle kann zum Zwecke des Verrastens der beiden Scheiben im Zuge deren Verbindung zum Dämpfungssystem zumindest die Dichtringscheibe entlang der Motorwelle axial in Richtung der mit dem Federelement einstückigen Gleitringscheibe geführt werden.

Im Anschluss an eine erste Relativdrehung zwischen den beiden Scheiben ist der Drehanschlag zwischen diesen erreicht, so dass dann stets beide Scheiben und somit das gesamte Dämpfungssystem fest auf der Motorwelle sitzen und mit dieser gegenüber dem ortsfesten Wellen- oder Kalottenlager rotiert. Um Infolge der Zentrifugalkraft nach außen geschleudertes Gleitlageröl aufzufangen und an das Lager zurückzuführen, dient der hierzu an die vorzugsweise schalenartige Dichtringscheibe angeformte, zum Wellenlager hin gerichtete Kragen als Ölfang.

Die mit der Erfindung erzielten Vorteile bestehen insbesondere darin, dass durch den Einsatz des vorzugsweise in beiden Lagerstellen der Motorwelle eines elektromotorischen Gebläseantriebs vorgesehenen Dämpfungssystems einerseits durch axiale Wellenauslenkungen sowie vom Läufer-Laufrad-System und/oder Kommutator-Bürsten-System erzeugte Geräusche oder Töne erheblich gedämpft werden. Andererseits sind aufgrund der Eintelligkeit der Gleitringscheibe und des Federelementes die Funktionen der Vibrationsdämpfung und der Axiallagerung zusammengefasst, wobei insgesamt ein aus vergleichsweise wenigen Teilen bestehendes Dämpfungssystem bereitgestellt ist.

Durch die gegenüber dem Stand der Technik reduzierte Anzahl der Bauteile des erfindungsgemäßen, nachfolgend auch als Dämpfungspaket bezeichneten Dämpfungssystems ist dieses einfach aufgebaut und insbesondere besonders einfach und fehlerfrei montierbar. So ist aufgrund der Integration des Federelementes in die Gleitringscheibe bzw. deren Einteiligkeit eine vereinfachte Erkennung einer nicht vollständigen Baugruppe erreicht, zumal das Federelement im eingebauten Zustand des Dichtungspaketes nicht sichtbar ist.

Nachfolgend wird ein Ausführungsbeispiel der Erfindung anhand einer Zeichnung näher erläutert. Darin zeigen:
- Fig. 1: teilweise im Längsschnitt einen elektromotorischen Antrieb für ein Heizungs- und Klimaanlagegebläse in einem Kraftfahrzeug mit einem BS-seltigen und einem AS-seitigen Kalottenlager mit einem erfindungsgemäßen Dämpfungssystem,
- Fig. 2: in einer perspektivischen Explosionsdarstellung das erfindungsgemäße Dämpfungssystem mit In Richtung auf eine Motorwelle hinter dem BS-seitigen Kalottenlager einer ringförmigen Dichtringscheibe und einer Dichtringscheibe mit angeformtem Federelement,
- Fig. 3a - 3c: die mit dem Federelement einteilige Dichtringscheibe in einer Draufsicht, in einer Seitenansicht bzw. in einer perspektivischen Schrägaufsicht.

Einander entsprechende Teile sind in allen Figuren mit den gleichen Bezugszelchen versehen.

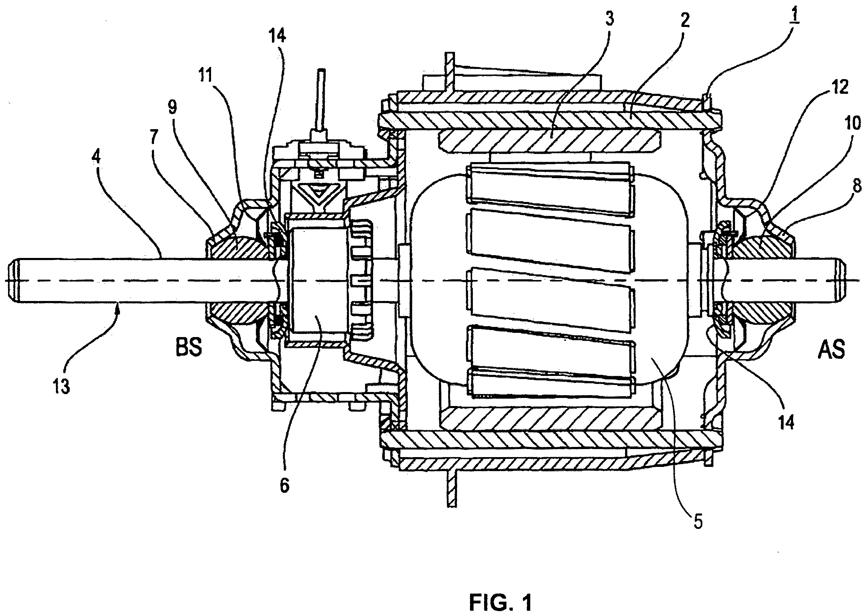

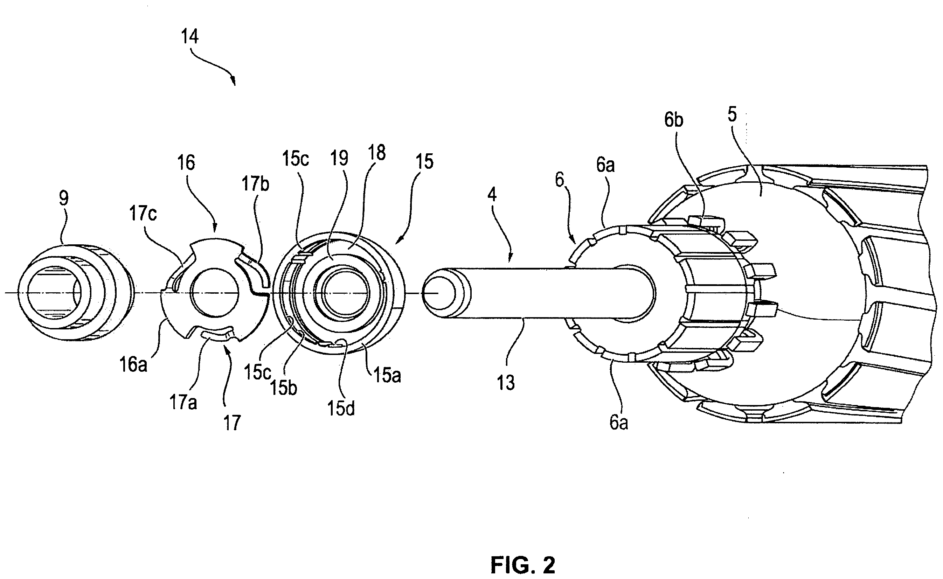

Fig. 1 zeigt einen elektromotorischen Antrieb in Form eines Kommutatormotors 1 mit einem Motorgehäuse (Poltopf) 2, an dessen Innenumfang eine der Polzahl des Motors 1 entsprechende Anzahl von schalenförmigen Erreger- oder Dauermagneten 3 gehalten sind. Eine Motorwelle 4 trägt in nicht näher dargestellter Art und Weise den als Rotorblechpaket mit darin eingewickelten Rotorwicklungen ausgeführten Rotor (Läufer) 5 des Kommutatormotors 1. Ein ebenfalls auf der Motorwelle 4 befestigter Kommutator 6 weist Kommutatorlamellen 6a mit Lamellenanschlüssen 6b (Fig. 2) auf, die mit den Rotorwicklungen des Läufers 5 verbunden sind. Die Lamellen 6a des Kommutators 6 werden in an sich bekannter Weise von Bürsten kontaktiert. Diese Motorseite wird häufig auch als Bürsten- oder Bürstensystemseite oder kurz mit BS (BS-seitig) bezeichnet Die gegenüberliegende Seite wird mit AS (AS-seitig) bezeichnet.

An der Seite BS des Kommutatormotors 1 ist am kommutatornahen Motorende ein BS-seitiges Lagerschild 7 am Motorgehäuse 2 befestigt. Am gegenüberliegenden, kommutatorfernen Wellenende der Motorwelle 4 ist ein AS-seitiges Lagerschild 8 am Motorgehäuse 2 befestigt. Die beiden Lagerschilde 7, 8 nehmen Kalottenlager 9 bzw. 10 auf, in denen die Motorwelle 4 über einen Ölfilm drehbar gelagert ist. Die beiden ortsfesten Kalottenlager 9, 10 werden jeweils mittels einer Klemmbrille 11, 12 gegen das jeweilige Lagerschild 7 bzw. 8 gepresst und verklemmt. Die Klemmbrille 11, 12 stützt sich dabei am jeweiligen Lagerschild 7 bzw. 8 ab.

Das kommutatorseitige Wellenende der Motorwelle 4 ragt BS-seitig mit einem genügend langen Wellenabschnitt 13 aus dem Lagerschild 7 heraus, um gemäß der in Fig. 1 der DE 295 13 633 U1 bekannten Art und Weise ein Lüfterrad eines Heizungs- und Klimaanlagengebläses eines Kraftfahrzeuges aufzunehmen, welches Lüfterrad dort mit dessen Nabe auf diesen Wellenabschnitt der Motorwelle 4 aufgepresst ist. Der Kommutatormotor 1, der bei dessen Drehung das Lüfterrad antreibt, dient somit als Gebläseantrieb.

Wie aus Fig. 2 vergleichsweise deutlich ersichtlich ist, ist zumindest an der BS-seitigen Lagerstelle, vorzugsweise auch an der AS-seitigen Lagerstelle, ein Dämpfungssystem oder -paket 14 vorgesehen. Dieses ist auf der dem jeweiligen Lagerschild 7, 8 abgewandten Lagerseite des Kalottenlagers 9 bzw, 10 auf die Motorwelle 4 aufgesetzt. Das Dämpfungssystem 14 nimmt das sich in Wellenlängsrichtung der Motorwelle 4 erstreckende Axialspiel auf.

Das Dämpfungssystem 14 dient einerseits zur Bedämpfung von Anschlaggeräuschen, die durch die axiale Auslenkung des vom Läufer 5 und Kommutator 6 inklusive Motorwelle 4 gebildeten System verursacht werden, zu dem im Falle des Gebläseantriebs auch das Lüfterrad gehört. Das Dämpfungssystem 14 reduziert somit denjenigen Schallpegel und bedämpft auch diejenigen Geräusche, die als vom Kommutator-Bürstensystem erzeugte U- oder Heultöne bekannt sind. Die entsprechende Geräuschentwicklung Ist auf Störungen pro Motorumdrehung zurückzuführen, die durch die Relativbewegung der Kommutatorlamellen und der darüber fahrenden Bürsten verursacht werden. Diese Störungen verursachen in dem relativ großen Kunststoffgehäuse charakteristische Geräusche in gehäuseteilspezifischen Resonanzstellen.

Das Dämpfungssystem 14 setzt sich aus einer Dichtringscheibe 15 und einer Gleitringscheibe 16 mit integriertem Federelement 17 zusammen. Das aus drei mit der Gleitringscheibe 16 einteiligen Federarmen 17a bestehende Federelement 17 ist dem jeweiligen Kalottenlager, hier dem Kalottenlager 9, zugewandt. Zwischen der Dichtringscheibe 15 und der Gleitringscheibe 16 ist ein definierter Federweg gebildet, der ca. 0,2 mm beträgt. Erfindungsgemäss liegen im zusammengesetzten Montagezustand des Dämpfungssystems 14 die Federarme 17a an der Dichtringscheibe 15 an. Dabei umgibt erfindungsgemäss ein an die Dichtringscheibe 15 angeformtes oder in diese eingesetztes, kreisringartiges Dämpfungselement 18 die Federarme 17a koaxial.

Das Dämpfungselement 18 ist vorzugsweise einstückiger Bestandteil der Dichtringscheibe 15 und besteht aus einem Dämpfungswerkstoff, der gegenüber dem vergleichsweise harten Werkstoff der übrigen Dichtringscheibe 15 vergleichsweise weich ist. Eine ebenfalls aus dem Dämpfungswerkstoff bestehende Wellenabdichtung 19, die mit der übrigen Dichtringscheibe 15 ebenfalls einstückig sein kann, umgreift die Motorwelle 4 und bildet dabei einen zylinderförmigen oder hülsenartigen Dichtungsübergang der Dichtringscheibe 15 auf die Motorwelle 4.

Die etwa schalenförmige Dichtringscheibe 15 weist einen umlaufenden Kragen 15a auf, um zum Schutz des Kommutators 6 betriebsbedingt nach außen geschleudertes Gleitlageröl aufzufangen. Dieser Kragen 15a wird zudem einerseits genutzt, um die Gleitringscheibe 16 mit integriertem Federelement 17 mit der Dichtringscheibe 15 zu verrasten. Hierzu ist am Kragen 15 eine vorzugsweise umlaufende Hinterschneidungs- oder Hintergriffskontur 15b angeformt, die sich radial zur Welle 4 hin erstreckt. Andererseits dienen innenseitig, also an die Krageninnenwand 15c angeformte oder aus dieser durch Umformung oder Verformung herausgearbeitete Nocken 15d als Drehanschläge für die Gleitringschelbe 16.

Im miteinander verrasteten Zustand der Dichtringscheibe 15 und der Gleitringscheibe 16 mit integriertem Federelement 17 hintergreifen Mitnehmerelemente 16a, von denen in Fig. 2 nur eines bezeichnet ist, die Hinterschneldungskontur 15b der Dichtringscheibe 15. Dadurch Ist die auf die Motorwelle 4 aufgepresste Dichtringscheibe 15 zur Gleitringscheibe 16 hin axial verschiebbar und wird somit durch die Verrastung an dieser fixiert.

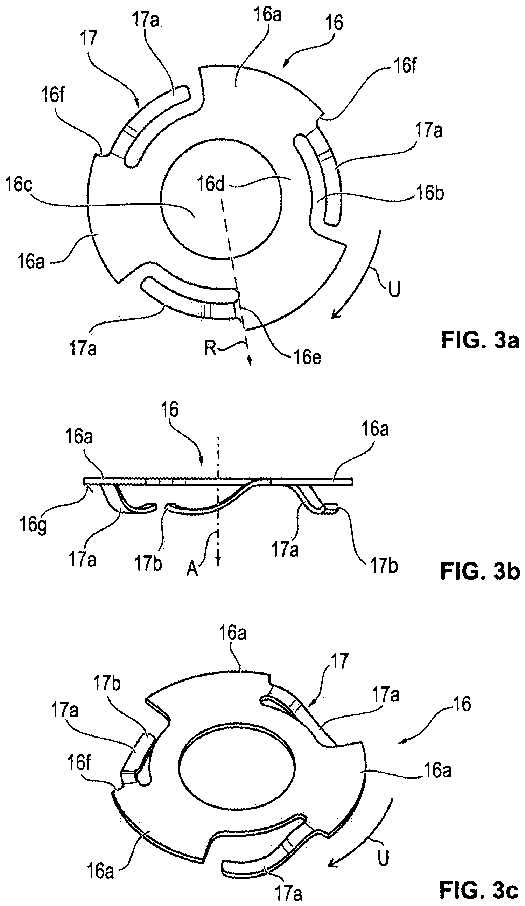

Wie anhand der in den Fig. 3a bis 3c dargestellten Gleitringscheibe 16 mit integriertem Federelement 17 vergleichsweise deutlich ersichtlich Ist, sind die sich radial erstreckenden Mitnehmerelemente 16a um 120° zueinander versetzt. Zwischen den Mitnehmerelementen 16a weist die Gleitringscheibe sektorartige Ausnehmungen 16b auf, an die sich - in Radialrichtung R zur zentralen Scheibenöffnung 16c hin - Ringabschnitte 16d anschließen. Die Federarme 17a sind an die Mitnehmerelemente 16a im Bereich deren Kreisradien 16e angeformt und erstrecken sich in Umfangsrichtung U der Gleltringscheibe 16 mit integriertem Federelement 17 kreisbogenförmig in die sektorartigen Ausnehmungen 16b der Gleitringscheibe 16 hinein.

Die Anbindung der Federarme 17a an die Mitnehmerelemente 16a der Gleitringscheibe 16 ist derart positioniert, dass die Mitnehmerelemente 16a die Federarme 17a unter Bildung von Anlagekanten 16f In Radialrichtung R überragen. Im verrasteten Zustand der Dichtringscheibe 15 und der Gleitringscheibe 16 bilden diese Anlagekanten 16f den Gegenanschlag der Gleitringscheibe 16 zum Drehanschlag der Dichtringscheibe 15 In Form deren Nocken 15d.

Wie aus den Figuren 3b und 3c ersichtlich ist, ragen die Federarme 17a des mit der Gleitringscheibe 16 einteiligen Federelementes 17 in Axialrichtung A aus der Scheibenebene oder Scheibenoberfläche 16g der Gleitringscheibe 16 heraus. Die Federarme 17a sind dabei in Umfangsrichtung U der Gleitringscheibe 16 kreisbogenförmig und in Axialrichtung A wellenförmig ausgestaltet. Die mit der Gleitringscheibe 16 einteiligen Federarme 17a bilden somit quasi ein ringförmiges Federelement 17 mit sinusförmigen Wellen. Dabei sind die Federarmenden 17b im Zuge der sinus- oder wellenförmigen Ausbildung der Federarme 17a zumindest geringfügig zur Scheibenoberseite 16g hin orientiert.

**Bezugszeichenliste**

| | | | |
|---|---|---|---|
| 1 | Kommutatormotor | 18 | Dämpfungselement |
| 2 | Motorgehäuse | 19 | Wellenabdichtung |
| 3 | Erregermagnet | | |
| 4 | Motorwelle | A | Axialrichtung |
| 5 | Läufer / Rotor | R | Radialrichtung |
| 6 | Kommutator | U | Umfangsrichtung |
| 7 | BS-seitiges Lagerschild | | |
| 8 | AS-seitiges Lagerschild | | |
| 9 | Kalottenlager | | |
| 10 | Kalottenlager | | |
| 11 | BS-seitige Klemmbrille | | |
| 12 | AS-seitige Klemmbrille | | |
| 13 | Wellenabschnitt | | |
| 14 | Dämpfungssystem/-paket | | |
| 15 | Dicht-/Ringscheibe | | |
| 15a | Kragen | | |
| 15b | Hinterschneidungskontur | | |
| 15c | Krageninnenwand | | |
| 15d | Nocke/Drehanschlag | | |
| 16 | Gleit-/Gleitringscheibe | | |
| 16a | Mitnehmerelement | | |
| 16b | Ausnehmung | | |
| 16c | Scheibenöffnung | | |
| 16d | Ringabschnitt | | |
| 16e | Kreisradius | | |
| 16f | Anlagekante | | |
| 16g | Scheibenoberseite/-ebene | | |
| 17 | Federelement | | |
| 17a | Federarm | | |
| 17b | Federarmende | | |

## Patentansprüche

1. Elektromotorischer Antrieb mit einem Kommutatormotor (1), dessen Motorwelle (4) auf axial gegenüberliegenden Seiten (BS, AS) in jeweils mittels eines Lagerschildes (7, 8) abgedeckten radialen Wellenlagern (9, 10) drehbar gelagert ist, wobei auf der dem Lagerschild (7, 8) abgewandten Lagerseite mindestens eines der Wellenlager (9) ein Dämpfungssystem (14) zur Schalldämpfung angeordnet ist, und wobei das Dämpfungssystem (14) eine Dichtringscheibe (15) und ein Federelement (17) sowie eine dem Wellenlager (9) zugewandte Gleitringscheibe (16) aufweist,
**dadurch gekennzeichnet,**
- **dass** das Federelement (17) einteiliger Bestandtell der Gleitringscheibe (16) ist, wobei entlang des Scheibenumfangs (U) der Gleitringscheibe (16) kreisbogenförmig verlaufende Federarme (17a) vorgesehen sind, die in Axialrichtung (A) aus der Scheibenoberfläche (16g) herausragen
- **dass** die Gleitscheibe (16) mit angeformtem Federelement (17) aus Metall, insbesondere aus Stahl, besteht, und
- **dass** die Dichtringscheibe (15) und die Gleitringscheibe (16) miteinander verrastet sind, wobei im zusammengesetzten Montagezustand des Dämpfungssystems (14) die Federarme (17a) an der Dichtscheibe (15) anliegen, wobei ein an die Dichtringscheibe (15) angeformtes oder in diese eingesetztes, kreisringartiges Dämpfungselement (18) die Federarme (17a) koaxial umgibt.

2. Elektromotorischer Antrieb nach Anspruch 1,
**dadurch gekennzeichnet,**
**dass** die Gleitringscheibe (16) kreissektorartige Mitnehmerabschnitte (16a) aufweist.

3. Elektromotorischer Antrieb nach Anspruch 2,
**dadurch gekennzeichnet,**
**dass** die Federarme (17a) an einander abgewandten Krelsradien (16e) der Mitnehmerabschnitte (16a) angeformt sind und sich in zwischen diesen befindlichen Ausnehmungen (16b) der Gleitringscheibe (16) erstrecken.

4. Elektromotorischer Antrieb nach Anspruch 3,
**dadurch gekennzeichnet,**
**dass** die Mitnehmerabschnitte (16a) die daran angeformten Federarme (17a) in Radialrichtung (R) zumindest geringfügig überragen.

5. Elektromotorischer Antrieb nach einem der Ansprüche 2 bis 4,
**dadurch gekennzeichnet,**
**dass** alternierend drei Federarme (17a) und drei Mitnehmerabschnitte (16a) gleichmäßig verteilt am Scheibenumfang (U) der Gleitringscheibe (16) angeordnet sind.

6. Elektromotorischer Antrieb nach einem der Ansprüche 1 bis 5,
**dadurch gekennzeichnet,**
**dass** die Armlänge eines jeden Federarms (17a) etwa 1/6 des Scheibenumfangs der Gleitringscheibe (16) beträgt.

7. Elektromotorischer Antrieb nach einem der Ansprüche 1 bis 6,
**dadurch gekennzeichnet,**
**dass** die Federarme (17a) wellenförmig mit zumindest geringfügig axial zur Scheibenoberfläche (16g) der Gleitringscheibe (16) hin gerichteten Federarmenden (17b) ausgebildet sind.

8. Elektromotorischer Antrieb nach Anspruch 1, **dadurch gekennzeichnet,**
**dass** die Dichtringscheibe (15) umfangsseitig einen umlaufenden Kragen (15a) mit daran angeformter Hinterschneidungskontur (15b) aufweist.

9. Elektromotorischer Antrieb nach Anspruch 8, **dadurch gekennzeichnet, dass** an den Kragen (15a) innenseitig mindestens ein Drehanschlag (15d) für die Gleitringscheibe (16) angeformt ist.

10. Elektromotorischer Antrieb nach Anspruch 9, **dadurch gekennzeichnet,**
**dass** die Mitnehmerabschnitte (16a) der Gleitringscheibe (16) einerseits zur Herstellung der Verrastung mit der Dichtringscheibe (15) die Hinterschneidungskontur (15b) hintergreifen und andererseits eine Anlagekante (16f) für den Drehanschlag (15d) der Dichtringscheibe (15) aufweisen.

## Claims

1. Electric motor drive having a commutator motor (1) whose motor shaft (4) is rotatably mounted on axially opposite sides (BS, AS) in respective radial shaft bearings (9, 10) which are covered by means of a bearing shield (7, 8), wherein a damping system (14) for noise damping is arranged on the bearing side, which faces away from the bearing shield (7, 8), of at least one of the shaft bearings (9), and wherein the damping system (14) has a sealing ring disc (15) and a spring element (17) and also a sliding ring disc (16) which faces the shaft bearing (9),
**characterized**
- **in that** the spring element (17) is an integral constituent part of the sliding ring disc (16), wherein spring arms (17a) which extend in a circular arc shape along the disc circumference (U) of the sliding ring disc (16) are provided which project out of the disc surface (16g) in the axial direction (A),
- **in that** the sliding disc (16) with integrally formed spring element (17) consists of metal, in particular of steel, and
- **in that** the sealing ring disc (15) and the sliding ring disc (16) are latched with one another, wherein, in the assembled mounting state of the damping system (14), the spring arms (17a) bear against the sealing disc (15), wherein a circular-ring-like damping element (18) which is integrally formed on or inserted into the sealing ring disc (15) coaxially surrounds the spring arms (17a).

2. Electric motor drive according to Claim 1,
**characterized**
**in that** the sliding ring disc (16) has circular-sector-like driver portions (16a).

3. Electric motor drive according to Claim 2,
**characterized**
**in that** the spring arms (17a) are integrally formed on mutually opposed circle radii (16e) of the driver portions (16a) and extend in cutouts (16b) in the sliding ring disc (16) that are situated between said portions.

4. Electric motor drive according to Claim 3,
**characterized**
**in that** the driver portions (16a) at least slightly protrude in the radial direction (R) beyond the spring arms (17a) integrally formed thereon.

5. Electric motor drive according to one of Claims 2 to 4,
**characterized**
**in that** three spring arms (17a) and three driver portions (16a) are alternatingly arranged in a uniformly distributed manner on the disc circumference (U) of the sliding ring disc (16).

6. Electric motor drive according to one of Claims 1 to 5,
**characterized**
**in that** the arm length of each spring arm (17a) is approximately 1/6 of the disc circumference of the sliding ring disc (16).

7. Electric motor drive according to one of Claims 1 to 6,
**characterized**
**in that** the spring arms (17a) are designed to have a wavy shape with spring arm ends (17b) directed at least slightly axially towards the disc surface (16g) of the sliding ring disc (16).

8. Electric motor drive according to Claim 1,
**characterized**
**in that** the sealing ring disc (15) has, circumferentially, a peripheral collar (15a) with an undercut contour (15b) integrally formed thereon.

9. Electric motor drive according to Claim 8,
**characterized**
**in that** at least one rotary stop (15d) for the sliding ring disc (16) is integrally formed on the inner side of the collar (15a).

10. Electric motor drive according to Claim 9,
**characterized**
**in that** the driver portions (16a) of the sliding ring disc (16) on the one hand engage behind the undercut contour (15b) in order to produce the latching with the sealing ring disc (15) and on the other hand have a bearing edge (16f) for the rotary stop (15d) of the sealing ring disc (15).

## Revendications

1. Mécanisme d'entraînement électromotorisé comprenant un moteur à collecteur (1), dont l'arbre de moteur (4) est monté à rotation sur des côtés (BS, AS) axialement opposés dans des paliers d'arbre (9, 10) radiaux respectivement recouverts au moyen d'un flasque de palier (7, 8), un système d'atténuation (14) servant à l'atténuation des sons étant disposé sur le côté de palier, à l'opposé du flasque de palier (7, 8), d'au moins l'un des paliers d'arbre (9), et le système d'atténuation (14) possédant une rondelle d'étanchéité (15) et un élément ressort (17) ainsi qu'une rondelle de glissement (16) faisant face au palier d'arbre (9),
**caractérisé en ce**
- **que** l'élément ressort (17) est un élément constitutif en une partie de la rondelle de glissement (16), des bras de ressort (17a) qui suivent un tracé en forme d'arc de cercle se trouvant le long du pourtour de rondelle (U) de la rondelle de glissement (16), lesquels font saillie hors de la surface de la rondelle (16g) dans la direction axiale (A),
- **que** la rondelle de glissement (16) sur laquelle est façonné l'élément ressort (17) se compose de métal, notamment d'acier, et
- **que** la rondelle d'étanchéité (15) et la rondelle de glissement (16) sont enclipsées l'une avec l'autre, les bras de ressort (17a) reposant contre la rondelle d'étanchéité (15) à l'état de montage assemblé du système d'atténuation (14), un élément d'atténuation (18) de type en anneau circulaire, façonné sur la rondelle d'étanchéité (15) ou inséré dans celle-ci, entourant les bras de ressort (17a) de manière coaxiale.

2. Mécanisme d'entraînement électromotorisé selon la revendication 1, **caractérisé en ce que** la rondelle de glissement (16) possède des portions à élément entraîneur (16a) en forme de secteurs de cercle.

3. Mécanisme d'entraînement électromotorisé selon la revendication 2, **caractérisé en ce que** les bras de ressort (17a) sont façonnés au niveau de rayons de cercle (16e) opposés les uns aux autres des portions à élément entraîneur (16a) et s'étendent dans des cavités (16b) de la rondelle de glissement (16) qui se trouvent entre celles-ci.

4. Mécanisme d'entraînement électromotorisé selon la revendication 3, **caractérisé en ce que** les portions à élément entraîneur (16a) font saillie au moins légèrement dans la direction radiale (R) au-dessus des bras de ressort (17a) façonnés au niveau de celles-ci.

5. Mécanisme d'entraînement électromotorisé selon l'une des revendications 2 à 4, **caractérisé en ce que** trois bras de ressort (17a) et trois portions à élément entraîneur (16a) sont distribués en alternance de manière régulière sur le pourtour de rondelle (U) de la rondelle de glissement (16).

6. Mécanisme d'entraînement électromotorisé selon l'une des revendications 1 à 5, **caractérisé en ce que** la longueur de bras de chaque bras de ressort (17a) est approximativement égale à 1/6 de la circonférence de rondelle de la rondelle de glissement (16).

7. Mécanisme d'entraînement électromotorisé selon l'une des revendications 1 à 6, **caractérisé en ce que** les bras de ressort (17a) sont réalisés de manière ondulée avec des extrémités de bras de ressort (17b) orientées au moins légèrement dans le sens axial vers la surface de rondelle (16g) de la rondelle de glissement (16).

8. Mécanisme d'entraînement électromotorisé selon la revendication 1, **caractérisé en ce que** la rondelle d'étanchéité (15) possède du côté de son pourtour une collerette circonférentielle (15a) au niveau de laquelle est façonné un contour de contredépouille (15b) .

9. Mécanisme d'entraînement électromotorisé selon la revendication 8, **caractérisé en ce qu'**au moins une butée de rotation (15d) pour la rondelle de glissement (16) est façonnée du côté intérieur au niveau de la collerette (15a).

10. Mécanisme d'entraînement électromotorisé selon la revendication 9, **caractérisé en ce que** les portions à élément entraîneur (16a) de la rondelle de glissement (16) viennent d'une part en prise par l'arrière dans le contour de contredépouille (15b) en vue d'établir l'enclipsage avec la rondelle d'étanchéité (15) et, d'autre part, présentent un bord d'appui (16f) pour la butée de rotation (15d) de la rondelle d'étanchéité (15) .
